# EUROPEAN PATENT APPLICATION

(11) **EP 1 637 205 A1**
(43) Date of publication of application: **22.03.2006**
(21) Application number: 04745265.1
(22) Date of filing: 21.05.2004
(51) Int. Cl.: B01D 21/08, B01D 21/30, C02F 1/52, C02F 1/56

(54) **FLOCCULAING SETTLING DEVICE**

(30) Priority: 22.05.2003 JP 2003144891; 03.06.2003 JP 2003157786; 17.07.2003 JP 2003198447
(71) Applicant: EBARA CORPORATION, Tokyo 144-8510 (JP)
(72) Inventor: KOSANDA, Sakae, EBARA CORPORATION, Ohta-ku, Tokyo 1448510 (JP); HATA, Ryosuke, EBARA CORPORATION, Ohta-ku, Tokyo 1448510 (JP); HINUMA, Hirotoshi, EBARA CORPORATION, Ohta-ku, Tokyo 1448510 (JP); SUZUKI, Keno, BUREAU SEWERAGE TOKYO METROP. GOV., Tokyo 1600023 (JP); FUJIHASHI, T., BUREAU SEWERAGE TOKYO METROP. GOV., Tokyo 1600023 (JP)
(74) Representative: Emde, Eric
(86) International application number: PCT/JP2004/006954
(87) International publication number: WO 2004/103521

(57) **Abstract**

A coagulation-sedimentation apparatus is designed to enable the apparatus to treat water at a higher rate.

The coagulation-sedimentation apparatus includes a separation tank body 60 divided into an upper chamber 61 and a lower chamber 62 by a partition member 64. The tank body has a raw water inlet pipe 66 that introduces raw water into the upper chamber, and a water distributing passage that introduces a part of the water from the upper chamber to the lower chamber. The upper chamber has a first treated water outlet 76, and the lower chamber has a second treated water outlet 78. The flow velocity of upward flow of the water toward the first treated water outlet 76 in the upper chamber and the flow velocity of upward flow of the water toward the second treated water outlet 78 in the lower chamber can be controlled so that flocs in the upward flows can settle.

## Description

### Technical Field:

The present invention relates to treatment of polluted water. More particularly, the present invention relates to a coagulation-sedimentation technique whereby a coagulant is added to water to be treated, i.e. polluted water, to aggregate and precipitate suspended solids in the water, thereby separating the solids.

### Background Art:

There is the following prior art concerning the coagulation-sedimentation technique for suspended solids:
Patent Document 1:
Japanese Patent Post-Examination Publication No. Sho 42-25986
Non-Patent Document 1:
Water Treatment Engineering (Second Edition), edited by Tetsuo Ide (1995), p.59-67
Non-Patent Document 2:
Water Treatment Management Handbook (published by Maruzen Co., Ltd.: 1998), p.124-130
Non-Patent Document 3:
Collection of Papers of 39th Sewerage Research Conference (2002), Session No. 2-6-2, p.380-382

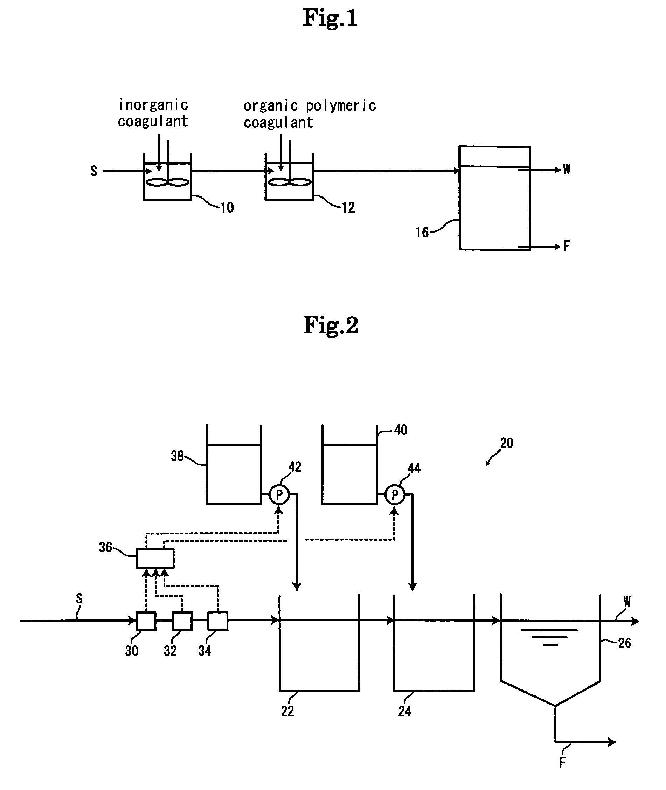

Sewerage generally includes two types: a separate sewerage system, and a combined sewerage system. The combined sewerage system treats sewage that is a mixture of soil water from homes, etc. and storm water. With the combined sewerage system, the amount of sewage rapidly increases when it rains in comparison to that when there is no rain. During non-rainfall events, primary treatment (mainly for removal of suspended solids) and secondary treatment (mainly biological treatment) are usually carried out. During a rainfall event, the following means may be taken. The secondary treatment, whose throughput cannot be increased, is omitted, and sewage that has been subjected to only the primary treatment is released to an ordinary river or the like, thereby reducing the amount of sewage released without being treated. Accordingly, it is demanded that the simplified treatment (in which sewage is subjected to only the primary treatment before being released) be speeded up in order to minimize the amount of sewage released untreated.
An apparatus for simplified treatment has, as shown in Fig. 1, a first agitation tank 10 in which an inorganic coagulant is added to sewage S under agitation, and a second agitation tank 12 in which an organic polymeric coagulant is added to the sewage S under agitation. The apparatus further has a solid-liquid separation tank 16 in which flocs of suspended solids formed by coagulation with the coagulants mixed with the sewage under agitation are separated from the sewage by aggregation and precipitation. The flocs are allowed to aggregate and discharged from the solid-liquid separation tank 16 as sludge F. In addition, treated water W, from which solid matter has been separated, is discharged from the solid-liquid separation tank 16. It is necessary in order to carry out the simplified treatment in this apparatus efficiently and at high speed to supply optimum amounts of coagulants, to agitate the coagulants and the sewage appropriately, and to efficiently aggregate and precipitate the suspended solids.

### Disclosure of the Invention:

### Problems to be Solved by the Invention:

An object of the present invention is to provide a coagulation-sedimentation apparatus improved to meet the above-described requirements so as to be capable of carrying out simplified treatment of polluted water even more efficiently and at an increased speed.

### Means for Solving the Problems:

That is, the present invention provides a coagulation-sedimentation apparatus characterized by having a coagulation-sedimentation tank. The coagulation-sedimentation tank has a separation tank body and a partition member installed in the separation tank body to divide the interior of the separation tank body into an upper chamber and a lower chamber. The coagulation-sedimentation tank further has a raw water inlet pipe that introduces water to be treated into the upper chamber, and a water distributing passage having an upper opening opening into the upper chamber and a lower opening opening into the lower chamber to guide a part of the water from the upper chamber to the lower chamber. The upper chamber has in an upper part thereof a first treated water outlet for discharging treated water to the outside. The lower chamber has a second treated water outlet above the lower opening of the water distributing passage to discharge treated water to the outside. The lower chamber further has a floc outlet below the lower opening of the water distributing passage to discharge flocs separated from the water. The flow velocity of upward flow of the water toward the first treated water outlet in the upper chamber and the flow velocity of upward flow of the water toward the second treated water outlet in the lower chamber can be controlled to velocities at which flocs in the upward flows can settle.
More specifically, the flow velocity of upward flow of the water toward the first treated water outlet in the upper chamber and the flow velocity of upward flow of the water toward the second treated water outlet in the lower chamber can be controlled to velocities at which flocs in the upward flows can settle by adjusting the amount of treated water discharged from the second treated water outlet.
The above-described arrangement enables the apparatus to receive and treat raw water at a higher rate as compared with a prior art one.
A specific structure may be as follows. The separation tank body has a bottom wall portion and a peripheral wall portion extending upward from the bottom wall portion. The partition member is installed with a gap between itself and the inner surface of the peripheral wall portion of the separation tank body. The water distributing passage is formed between the partition member and a funnel-shaped member installed below the partition member to slant downward from the inner surface of the peripheral wall portion of the separation tank body toward the center of the separation tank body.

Even more specifically, the partition member may be formed in a bowl-like shape recessed convergently downward toward the central portion thereof, and the raw water inlet pipe may be adapted to discharge the water to be treated downwardly toward the central portion of the partition member.
The arrangement may also be such that the upper part of the first chamber is provided with a floating filtering medium, a filtering medium outflow preventing screen above the floating filtering medium, and a filtering medium retaining screen below the floating filtering medium, and that the first treated water outlet is provided above the filtering medium outflow preventing screen.

In addition, the present invention provides a coagulation-sedimentation apparatus arranged as stated above, which further has a coagulant adding device that adds a coagulant to the water to be treated introduced into the separation tank body by the raw water inlet pipe. The coagulant adding device has a vertical sinuous flow path structure consisting essentially of a series of at least one downward flow path and at least one upward flow path for passing the water to be treated. The coagulant is added to the water to be treated at the upstream side of the vertical sinuous flow path structure, and the water is supplied to the raw water inlet pipe through the upward flow path and the downward flow path.
This coagulation-sedimentation apparatus enables the coagulant to be efficiently and surely mixed with the water to be treated by passing the water through the vertical sinuous flow path.

More specifically, the coagulant adding device may be arranged as follows. The coagulant adding device has two coagulant adding tanks disposed successively along the flow path of the water to be treated. The upstream-side coagulant adding tanks adds an inorganic coagulant, and the downstream-side coagulant adding tank adds an organic coagulant. The water to which the inorganic coagulant and the organic coagulant have been added is supplied to the raw water inlet pipe.

In addition, the present invention provides a coagulation-sedimentation apparatus arranged as stated above, which further has a flowmeter that measures the quantity of water to be treated introduced into the separation tank by the raw water inlet pipe, and a methyl orange alkalinity meter that measures the methyl orange alkalinity of the water to be treated. The apparatus further has an SS meter or a turbidimeter that measures the suspended solid concentration in the water to be treated.
More specifically, the apparatus may have a controller for calculating an appropriate amount of coagulant to be added to the water to be treated on the basis of data measured with the flowmeter, the methyl orange alkalinity meter, and the SS meter or the turbidimeter.
Even more specifically, the apparatus may have a controller for calculating during a rainfall event an appropriate amount of coagulant to be added for suspended solids in the water that is expected in the absence of the rainfall and also calculating an appropriate amount of coagulant to be added for suspended solids added to the water by the rainfall on the basis of data measured with the flowmeter, the methyl orange alkalinity meter, and the SS meter or the turbidimeter.
This coagulation-sedimentation apparatus makes it possible to determine an amount of coagulant to be added by taking into consideration the suspended solid concentration and the methyl orange alkalinity, noting the fact that even if the same amount of coagulant is added, the coagulating effect of the coagulant varies according to the methyl orange alkalinity of the water to be treated.

In addition, the present invention provides a coagulation-sedimentation apparatus having a flowmeter that measures the quantity of water to be treated introduced into the separation tank through the raw water inlet pipe, and an electric conductivity meter that measures the electric conductivity of the water to be treated. The apparatus further has an SS meter or a turbidimeter that measures the suspended solid concentration in the water to be treated.
More specifically, the coagulation-sedimentation apparatus may have a controller for calculating an appropriate amount of coagulant to be added to the water to be treated on the basis of data measured with the flowmeter, the electric conductivity meter, and the SS meter or the turbidimeter.
Even more specifically, the coagulation-sedimentation apparatus may have a controller for calculating during a rainfall event an appropriate amount of coagulant to be added for suspended solids in the water that is expected in the absence of the rainfall and also calculating an appropriate amount of coagulant to be added for suspended solids added to the water by the rainfall on the basis of data measured with the flowmeter, the electric conductivity meter, and the SS meter or the turbidimeter.

### Advantageous Effects of the Invention:

As has been stated above, the coagulation-sedimentation apparatus according to the present invention makes it possible to efficiently perform coagulation-sedimentation treatment of water to be treated, i.e. polluted water.
Further, by using a coagulant mixing tank having a sinuous flow path structure, the coagulants can be efficiently and surely mixed with the water to be treated. Thus, the coagulants can be used effectively.
Further, during a rainfall event, an appropriate amount of coagulant can be added according to the water quality of the water to be treated that may change owing to the inflow of rain water. In this regard also, the coagulants can be used effectively.

### Brief Description of the Drawings:

[Fig. 1] is a conceptual view of a conventional coagulation-sedimentation apparatus.
[Fig. 2] is a conceptual view of a coagulation-sedimentation apparatus according to the present invention.
[Fig. 3] is a diagram schematically showing the structure of a mixing tank with a sinuous flow path structure used in the present invention.
[Fig. 4] is a diagram showing a mixing tank with a sinuous flow path structure similar to that of Fig. 3, which is provided with agitators.
[Fig. 5] is a sectional structural view showing an example of a solid-liquid separation tank according to the present invention.
[Fig. 6] is a sectional structural view showing another example of the solid-liquid separation tank according to the present invention.
[Fig. 7] is a graph showing the results of treatment of water treated by the solid-liquid separation tank of Fig. 5.
[Fig. 8] is a graph showing the relationship between water to be treated adjusted for methyl orange alkalinity by adding sulfuric acid thereto and the turbidity of the treated water.
[Fig. 9] is a graph showing the relationship between the alkalinity of water flowing in during a rainfall event and the turbidity of the treated water.
[Fig. 10] is a graph showing changes in methyl orange alkalinity when soil water during a non-rainfall event is diluted with rain water.
[Fig. 11] is a graph showing the relationship between the proportion (%) of soil water in a mixture of soil water and rain water on the one hand and, on the other, electric conductivity and methyl orange alkalinity.
[Fig. 12] is a graph showing changes with time of the suspended solid concentration (SS) and methyl orange alkalinity of water flowing in during a rainfall event.
[Fig. 13] is a graph showing the relationship between electric conductivity and methyl orange alkalinity. Explanation of Reference Symbols:
- 20:: coagulation-sedimentation apparatus
- 22:: inorganic coagulant mixing tank
- 24:: organic polymeric coagulant mixing tank
- 26:: solid-liquid separation tank
- 30:: flowmeter
- 32:: methyl orange alkalinity meter
- 34:: SS meter
- 36:: controller
- 38:: inorganic coagulant tank
- 40:: organic coagulant tank
- 42, 44:: pump
- 60:: separation tank body
- 61:: upper chamber
- 62:: lower chamber
- 64:: partition member
- 66:: raw water inlet pipe
- 70:: upper opening
- 72:: lower opening
- 74:: water distributing passage
- 76:: first treated water outlet
- 78:: second treated water outlet
- 80:: sludge outlet
- 81:: funnel-shaped member
- 82:: floating filtering medium
- 84:: filtering medium outflow preventing screen
- 86:: filtering medium retaining screen
- 88:: scraper
- 90:: motor
- 94:: flow controller
- 96:: straightening plate
- 98:: draft tube
- S:: water to be treated (before treatment)
- W:: treated water (after treatment)
- F:: aggregated flocs (sludge)

### Best Mode for Carrying Out the Invention:

The present invention will be described below on the basis of embodiments shown in the accompanying drawings.
Fig. 2 shows an outline of a coagulation-sedimentation apparatus 20 according to the present invention.
That is, the coagulation-sedimentation apparatus 20 has an inorganic coagulant mixing tank 22, an organic coagulant mixing tank 24, and a solid-liquid separation tank 26. Water S to be treated, i.e. polluted water, is mixed with an inorganic coagulant first in the inorganic coagulant mixing tank 22. Next, the water S is mixed with an organic polymeric coagulant in the organic coagulant mixing tank 24 and sent to the solid-liquid separation tank 26 where suspended solids in the water are allowed to aggregate into flocs F. The flocs are thickened to form sludge in the bottom of the solid-liquid separation tank 26 and then discharged therefrom. In addition, treated water W, from which the suspended solids have been removed, is discharged from the top of the solid-liquid separation tank 26.

A raw water inlet pipe for introducing the water S into the inorganic coagulant mixing tank 22 is provided with a flowmeter 30 for measuring the flow rate of the water S. The raw water inlet pipe is further provided with a methyl orange alkalinity meter 32 for measuring the methyl orange alkalinity of the water and an SS meter 34 for measuring the SS (suspended solid concentration) in the water. A controller 36 controls a pump 42 for an inorganic coagulant tank 38 and a pump 44 for an organic coagulant tank 40 on the basis of data measured with the above-described measuring devices, thereby controlling the amounts of inorganic and organic polymeric coagulants supplied respectively to the inorganic coagulant mixing tank 22 and the organic coagulant mixing tank 24, as will be described later. A turbidimeter may be used in place of the SS meter 34 to perform the required measurement.

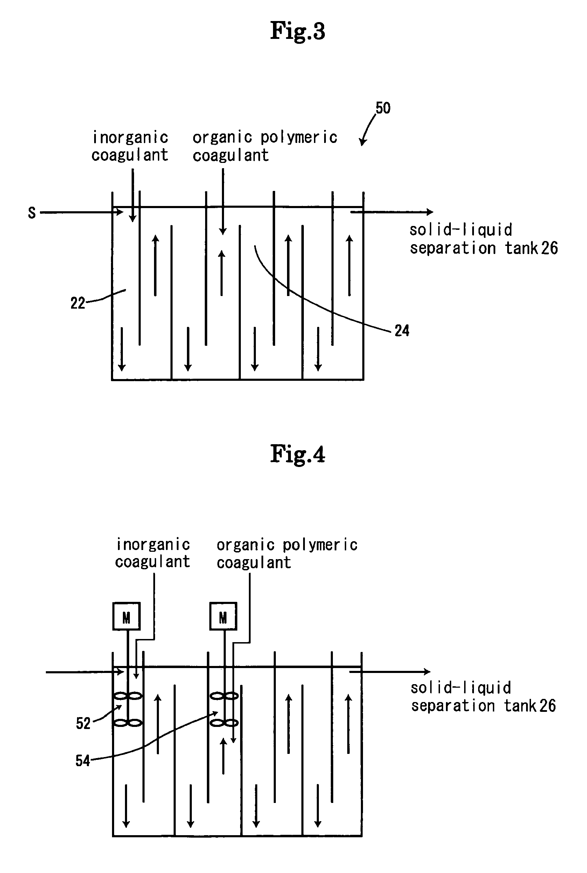

Fig. 3 shows a coagulant mixing tank 50 formed by integrating together the inorganic coagulant mixing tank 22 and the organic coagulant mixing tank 24, which are used in the present invention, into a single mixing tank that is baffled to provide a serpentine or sinuous flow path. More specifically, the mixing tank 50 has a vertical sinuous flow path structure with a total of 8 compartments provided in series from the upstream side to the downstream side of the flow of water to be treated. The compartments consists of pairs of downward and upward flow inducing compartments. The first to fourth compartments from the upstream side in combination correspond to the above-described inorganic coagulant mixing tank 22. The fifth to eighth compartments in combination correspond to the above-described organic coagulant mixing tank 24.

That is, an inorganic coagulant is added to the water S to be treated at a raw water inlet portion at the upstream end of the inorganic coagulant mixing tank 22. Then, the water S passes in the form of downward flow → upward flow → downward flow → upward flow, thereby being mixed with the coagulant. Then, the water S is supplied to the upstream end of the organic polymeric coagulant mixing tank 24 (i.e. the downstream end of the fourth compartment), where an organic coagulant is added to the water S. The water S is mixed with the organic coagulant by making use of the flow in the baffled mixing tank with a sinuous flow path in the same way as in the case of the inorganic coagulant. While forming flocs of suspended solids, the water S is sent to the solid-liquid separation tank 26.

In the baffled mixing tank, it is desirable that after the addition of the inorganic coagulant, the flow velocity should be kept at not lower than 0.15 m/sec., preferably not lower than 0.17 m/sec., and that the retention time until the organic polymeric coagulant is added should be not less than 100 seconds. After the addition of the organic polymeric coagulant, it is also desirable that the flow velocity should be kept at not lower than 0.15 m/sec., preferably not lower than 0.17 m/sec., and that a retention time of not less than 130 seconds should be available before the water is introduced into the solid-liquid separation tank.

Fig. 4 shows a baffled mixing tank with a sinuous flow path according to another embodiment of the present invention, which has basically the same structure as that shown in Fig. 3. In the tank shown in Fig. 4, small-sized agitators 52 and 54 are installed at respective points where an inorganic coagulant and an organic polymeric coagulant are added, for the purpose of assisting in dispersion of the coagulants. It should be noted that the diffusion operation can also be implemented by providing fine openings in the associated coagulant-loading nozzles and adding the coagulants through the fine openings, instead of using agitators.

The conventional apparatus shown in Fig. 1 and the apparatus according to the present invention shown in Figs. 3 and 4 were tested by using sewage flowing in during a rainfall event as water S to be treated and using ferric chloride as an inorganic coagulant and an anionic polymeric coagulant as an organic polymeric coagulant.
The baffled mixing tank 50 according to the present invention, which is shown in Fig. 3, had a vertical sinuous flow path structure with a series of 8 compartments each having a size of 370 mm x 750 mm and an effective depth of 4550 mm. The ferric chloride was added in the first compartment constituting the inorganic coagulant mixing tank 22. The anionic polymeric coagulant was added at the downstream end of the fourth compartment defining the upstream end of the organic coagulant mixing tank. A conventional solid-liquid separator was connected in the subsequent stage to carry out solid-liquid separation.
In the baffled mixing tank according to the present invention shown in Fig. 4, agitation was performed with the agitators 52 and 54 when the coagulants were added. The retention time of the water in each agitation region was 10 seconds.

Table 1 below shows treatment conditions and treatment results of coagulant mixing tests (a) and (b) conducted by using the apparatus of Fig. 3 and the apparatus of Fig. 4, respectively, and a coagulant mixing test using the conventional apparatus of Fig. 1.

**[Table 1]**

| Items | Method of present invention (Example 1) | | Conventional method |
|---|---|---|---|
| | (a) | (b) | |
| Wastewater treatment flow rate (m³/h) | 180m³/h | | |
| Raw water SS (mg/L) | 120-320 | 110-300 | 90-320 |
| Ferric chloride dose (mg/L) | 40 | 40 | 40 |
| Anionic polymeric coagulant dose (mg/L) | 3.0 | 3.0 | 3.0 |
| Agitator rotational speed (coagulation tank and agitator) | - | 180 (x2) | 180 (x2) |
| Agitator driver power (kW) | - | 0.75 (x2) | 5.5 (x2) |
| Coagulation tank effective capacity (m³) | - | | 2.7 (x2) |
| Retention time in coagulation tank (sec) | - | | 54 (x2) |
| Baffled mixing tank flow velocity (m/sec) | 0.18 | 0.18 | - |
| Method of present invention Retention time (sec): from ferric chloride addition to polymeric coagulant addition | 105 | 105 | - |
| Method of present invention Retention time (sec): from polymeric coagulant addition to solid-liquid separation tank inlet | 132 | 132 | - |
| Solid-liquid separator treated water SS (mg/L) | 15-54 | 15-42 | 19-72 |

In all the tests (a) and (b) using the apparatus according to the present invention and the test using the conventional apparatus, a continuous water flow experiment was carried out for 7 hours at 180 m³/h, and the SS (suspended solid concentration) in raw water introduced into the apparatus during the experiment and the SS of water W treated in the solid-liquid separator were monitored. The suspended solid concentration SS in the introduced raw water S was 120-320 mg/L for the apparatus of Fig. 3, 110-300 mg/L for the apparatus of Fig. 4, and 90-320 mg/L for the conventional apparatus shown in Fig. 1. Thus, the suspended solid concentration SS was substantially the same for all the apparatus tested. The amount of each coagulant added was the same for all the apparatus: the ferric chloride dose was 40 mg/L, and the anionic polymeric coagulant dose was 3.0 mg/L. The agitation rotational speed of each agitator in the apparatus of Fig. 4 and in the conventional apparatus of Fig. 1 was 180 rpm. Both the mixing tanks of the conventional apparatus have an effective capacity of 2.7 m³, and the retention time of water in each mixing tank was 54 seconds.

In the apparatus according to the present invention, the period of time from the addition of ferric chloride to the addition of the anionic polymeric coagulant was 105 seconds. The period of time from the addition of the anionic polymeric coagulant to the arrival at the solid-liquid separation tank inlet was 132 seconds. The flow velocity in the baffled mixing tank was 0.18 m/sec. under all the conditions.
With the conventional apparatus of Fig. 1, the SS of water treated in the solid-liquid separator was 19-72 mg/L. In contrast, the SS of treated water reduced to 15-54 mg/L in the apparatus of Fig. 3 and to 15-42 mg/L in the apparatus of Fig. 4. The reason for this may be as follows. In the apparatus according to the present invention, the use of the baffled mixing tank prevented short-circuiting of water flow (i.e. water flowing to the downstream side without being agitated substantially), which is deemed to occur in the coagulation tank of the conventional apparatus, and hence coagulant mixing was sufficiently effected to perform flocculation.

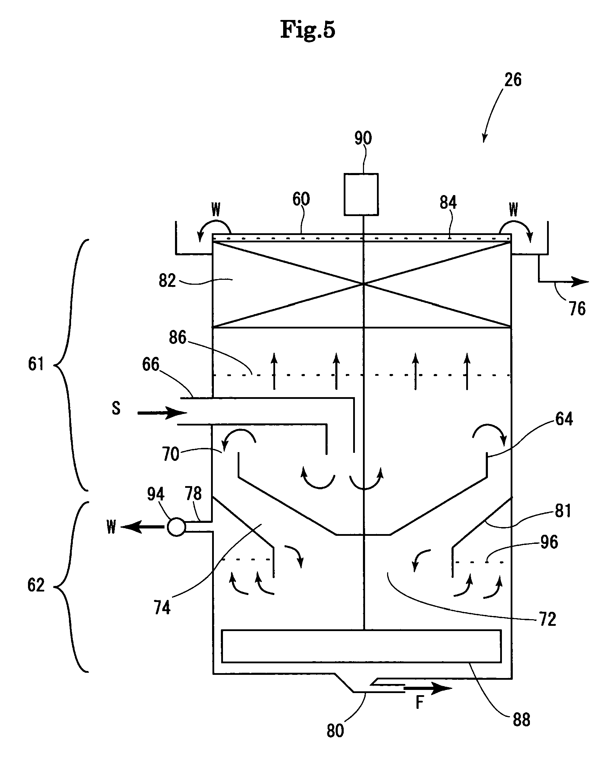

Fig. 5 shows an example of the solid-liquid separation tank 26 according to the present invention.
A solid-liquid separation tank is basically structured to settle flocs of suspended solids formed by addition of coagulants and to discharge the treated liquid, from which suspended solids have been removed, from a discharge outlet provided in the upper part of the solid-liquid separation tank. The conventional solid-liquid separation tank has the problem that if the flow rate (flow velocity) of water being treated that flows upward toward the discharge outlet is made higher than the settling velocity of flocs, the flocs may be undesirably discharged to the outside from the discharge outlet. The solid-liquid separation tank 26 according to the present invention enables the water treatment velocity to be made higher than the floc settling velocity without causing the outflow of flocs, as will be described below.

The solid-liquid separation tank 26 shown in Fig. 5 has a separation tank body 60 and a partition member 64 installed in the separation tank body to divide the interior of the separation tank body into an upper chamber 61 and a lower chamber 62. The solid-liquid separation tank 26 further has a raw water inlet pipe 66 that introduces water S to be treated that has been mixed with coagulants (as stated above) into the upper chamber. Further, the solid-liquid separation tank 26 has a water distributing passage 74 that has an upper opening 70 opening into the upper chamber 61 and a lower opening 72 opening into the lower chamber 62 to guide a part of the water from the upper chamber 61 to the lower chamber 62.

The upper chamber 61 has in an upper part thereof a first treated water outlet 76 for discharging treated water to the outside. The lower chamber 62 has a second treated water outlet 78 above the lower opening 72 of the water distributing passage to discharge treated water. The lower chamber 62 further has a sludge outlet 80 below the lower opening 72 of the water distributing passage 74 to discharge thickened floc, that is, sludge F,

In the illustrated example, the partition member 64 is installed with a gap between itself and the inner peripheral wall surface of the separation tank body 60. The partition member 64 has a bowl-like shape recessed convergently toward the central portion thereof. A funnel-shaped member 81 is installed below the partition member 64. The funnel-shaped member 81 slants downwardly from the inner peripheral wall surface of the separation tank body 60 toward the center of the separation tank body. The water distributing passage 74 is formed between the funnel-shaped member 81 and the partition member 64. The water distributing passage 74 has a substantially uniform horizontal sectional area over the entire length thereof so that the downward flow velocity will not change to a considerable extent throughout the passage, to prevent breakage of flocs. The raw water inlet pipe 66 discharges the water S downwardly toward the central portion of the partition member 64.

The upper part of the upper chamber 61 is provided with a floating filtering medium 82, a filtering medium outflow preventing screen 84 above the floating filtering medium 82, and a filtering medium retaining screen 86 below the floating filtering medium 82.
A scraper 88 is provided in the lower chamber 62. The scraper 88 is rotated slowly by a motor 90 provided at the top of the separation tank body 60 to scrape and collect flocs settled in the bottom of the separation tank body. The collected flocs are discharged from the sludge outlet 80 as thickened floc, i.e. sludge F.
The second treated water outlet 78 is provided with a flow controller 94, e.g. a pump, a valve, or a movable weir, for controlling the flow rate of treated water discharged from the second treated water outlet. By performing flow control with the flow controller, the flow velocity of upward flow of water toward the first treated water outlet 76 in the upper chamber and the flow velocity of upward flow of water toward the second treated water outlet 78 in the lower chamber can be controlled to velocities at which flocs in the upward flows can settle. To maintain a favorable solid-liquid separation effect in the lower chamber and to clarify separated water W, the turbidity of separated water in the lower chamber may be continuously measured with a turbidimeter, and the flow rate of separated water in the second chamber may be automatically controlled on the basis of the measured turbidity. The index of clarification is not limited to turbidity but may be SS. Reference numeral 96 in the figure denotes a straightening plate for straightening the upward flow in the lower chamber.

Next, the operation of the coagulation-sedimentation apparatus shown in Fig. 5 will be explained.
Water S to be treated that has previously been mixed successively with an inorganic coagulant, e.g. ferric chloride, and an organic coagulant, e.g. an anionic polymeric coagulant, as has been described on the basis of Figs. 3 and 4, is supplied downwardly from the raw water inlet pipe 66 toward the partition member 64. The supplied water turns around at the partition member 64 to form upward flow. The water is agitated, so that suspended solids therein are allowed to aggregate into flocs. While the water is flowing upward in the upper chamber 61, collision and coalescence of flocs proceed. As the water in the upper part of the lower chamber 62 is discharged through the second treated water outlet 78, a part of the water in the upper chamber 61 passes through the upper opening 70 and the water distributing passage 74 and enters the lower chamber 62 from the lower opening 72. Consequently, the upward flow velocity of the water in a region above the upper end edge of the partition member 64 is lower than the treatment velocity (i.e. a flow velocity obtained by dividing the quantity of water to be treated by the tank cross-sectional area). The flow velocity of the upward flow in the upper chamber is reduced to a flow velocity at which flocs can settle by adjusting the outflow from the second treated water outlet 78. In the upper chamber 61, a floc blanket layer in which flocs aggregate and stay is formed above the partition member 64. The floc blanket layer performs the function of filtering suspended solids remaining in the upward flow toward the first treated water outlet 76 in combination with the floating filtering medium 82.

In early stages of the apparatus operation, the formation of the flocs and the floc blanket layer is insufficient, and the flocs having a low settling velocity rise in the upper chamber 61, together with the treated water. The flocs rising in this way are separated and removed by the floating filtering medium 82, and the clarified treated water W is discharged from the first treated water outlet pipe 76.

Meanwhile, the flocs descending into the lower chamber 62 settle downward in the lower chamber 62 and are collected by the scraper 88 and discharged from the sludge outlet 80 as thickened floc, i.e. sludge. Water from which the settled flocs have been removed flows as upward flow and is discharged from the second treated water outlet 78 as clarified second chamber treated water W.

If the flow velocity of water introduced into the lower chamber 62 from the upper chamber 61 through the water distributing passage 74 is high, the flocs accumulated in the lower chamber are stirred up undesirably. To prevent stirring of the accumulated flocs, the downward flow velocity is adjusted to not higher than 5 m/min., preferably not higher than 2 m/min.

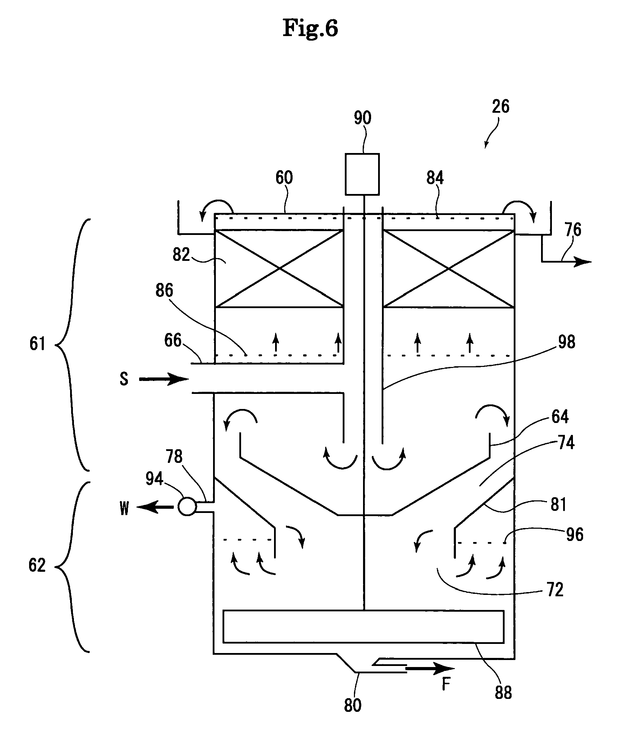

Fig. 6 is a sectional structural view showing another example of the solid-liquid separation tank according to the present invention. The structure shown in Fig. 6 differs from the structure shown in Fig. 5 in that the water being treated flows into the upper chamber 61 through a draft tube 98.

The following is a treatment test carried out by using the solid-liquid separation tank 26 of Fig. 5.
The separation tank body 60 used had an inner diameter of 2,000 mm and a height of 6,500 mm.
Treatment conditions were as follows:
- Inflow of raw water:: 176 m³/h
- Upper chamber treated water quantity:: 97 m³/h
- Lower chamber treated water quantity:: 61 m³/h
- Sludge discharge rate:: 18 m³/h
- Upper chamber water separation area:: 2.93 m²
- Applied coagulants:: ferric chloride anionic polymeric coagulant
- Filtering medium:: unused

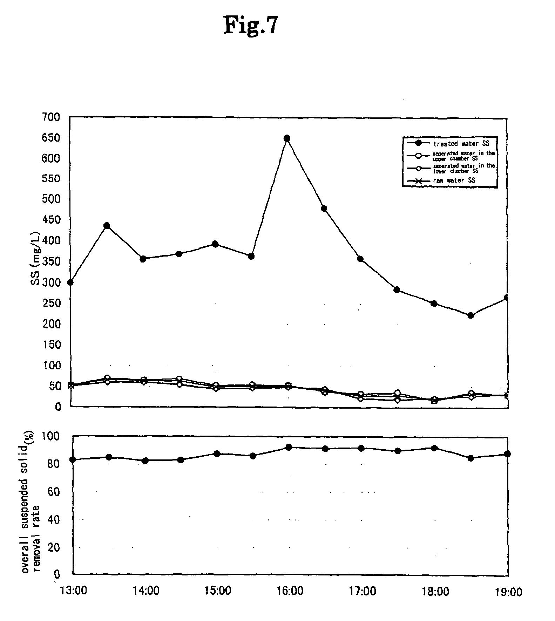

Fig. 7 is a graph showing changes in water quality after treatment when using water flowing into a primary sedimentation basin of a combined sewerage system during a rainfall event as water to be treated.
With the conventional solid-liquid separation tank, flocs did not settle but accompanied the upward flow and overflowed together with the treated water in a superhigh high-speed treatment performed at a treatment velocity exceeding 35 m/h. With the solid-liquid separation tank of the present invention, even when the treatment velocity was 60 m/h, it was possible to perform favorable solid-liquid separation in both the upper and lower chambers by adjusting the upward flow velocity in the upper part of the upper chamber to 33 m/h and the upward flow velocity in the upper part of the lower chamber to 35 m/h. Average values of SS over 6 hours were as follows: 364 mg/L in raw water; 47 mg/L in the separated water in the upper chamber; and 41 mg/L in the separated water in the lower chamber. An average value of the overall suspended solid removal rate was 88%.

As has been stated above, in the coagulation-sedimentation apparatus according to the present invention, coagulants are added to water to be treated to aggregate and precipitate suspended solids in the water. In this regard, it is necessary to cause an optimum aggregating reaction by adding the appropriate amounts of coagulants according to the water quality of water to be treated. Among influencing factors on the aggregating reaction, those concerning the water quality of water to be treated include particle concentration, pH, methyl orange alkalinity, temperature, and coexisting ions. The conventional coagulant dose control is generally based on the particle concentration among the above-described influencing factors. More specifically, the control process is carried out in such a manner that when the suspended solid concentration in water to be treated is low, the coagulant dose is also set low, whereas when the suspended solid concentration is high, the coagulant dose is also set high.

In a case where rain water is mixed with water to be treated during a rainfall event, e.g. in the case of a combined sewerage system, soil water is diluted with the rain water. Meanwhile, pollutants on the road surface and so forth are washed away by the rain water and mixed with the sewage. In addition, mixing of rain water increases the flow rate of the sewage. This may cause conduit sediment to be washed away. Owing to these actions, the suspended solid concentration in sewage during a rainfall event shows changes different from those in a fine weather. Accordingly, when sewage is treated through coagulation by the conventional method during a rainfall event, the appropriate coagulant dose is determined on the basis of the suspended solid concentration in the water to be treated at that time.

In coagulation treatment of raw water that is mixed with rain water during a rainfall event, the following problems are encountered in controlling the coagulant dose on the basis of the suspended solid concentration:
(1) Mixing of rain water lowers the methyl orange alkalinity of the water to be treated. When the methyl orange alkalinity reduces, the appropriate coagulant dose decreases even if the suspended solid concentration remains the same. Consequently, if the coagulant dose is controlled on the basis of the suspended solid concentration, the coagulants will be added in excess, causing an increase in the running cost.
(2) Mixing of rain water causes a change in the composition of suspended solids in the water to be treated. Suspended solids contained in the water to be treated during the rainfall event may be roughly divided into two groups. One is suspended solids contained in the raw water during non-rainfall events and diluted with the rain water. The other is suspended solids that are mixed with the raw water only during the rainfall event. These two groups of suspended solids consist of different components and therefore are different from each other in the way in which the coagulants take effect thereon, and hence different from each other in the optimum coagulant dose even if the suspended solid concentration is the same. For this reason, it is inappropriate to set a coagulant dose for the liquid to be treated containing a mixture of the two groups of suspended solids on the basis of the overall suspended solid concentration in the liquid after it has been mixed with the two groups of suspended solids. If an excess amount of coagulant is added, the running cost increases. If the amount of coagulant added is insufficient, the water quality of the treated water degrades. Accordingly, it is desirable to control the coagulant dose on the basis of the suspended solid concentration for each group of suspended solids with a view to preventing excess or insufficient addition of coagulants.

In view of the above, the present invention makes it possible to control the coagulant dose so that an appropriate amount of coagulant is added according to the water quality of the water to be treated. This will be explained hereinbelow.
In the present invention, the coagulant dose is controlled on the basis of the methyl orange alkalinity or electric conductivity of the water to be treated. The present invention was made on the basis of the following experimental findings.
In a combined sewerage system:
(1) the methyl orange alkalinity and electric conductivity of sewage during a rainfall event are lower than those during non-rainfall events;
(2) cohesiveness increases with reduction in the methyl orange alkalinity;
(3) when sewage during a non-rainfall event is diluted with rain water, the methyl orange alkalinity reduces according to the diluting ratio; therefore, the ratio of dilution with rain water can be obtained from the reduction in the methyl orange alkalinity;
(4) the ratio of dilution with rain water can also be obtained by using the electric conductivity in the same way as in the case of the methyl orange alkalinity; and
(6) a reduction in the methyl orange alkalinity can be estimated from a reduction in the electric conductivity.

The relationship between the alkalinity and coagulation characteristics in the present invention will be explained below with regard to sewage in a combined sewerage system during a rainfall event, by way of example. It should be noted, however, that the present invention is not limited to the combined sewerage system but can be applied to any coagulation treatment that treats water whose methyl orange alkalinity or electric conductivity may change owing to the inflow of rain water during a rainfall event.

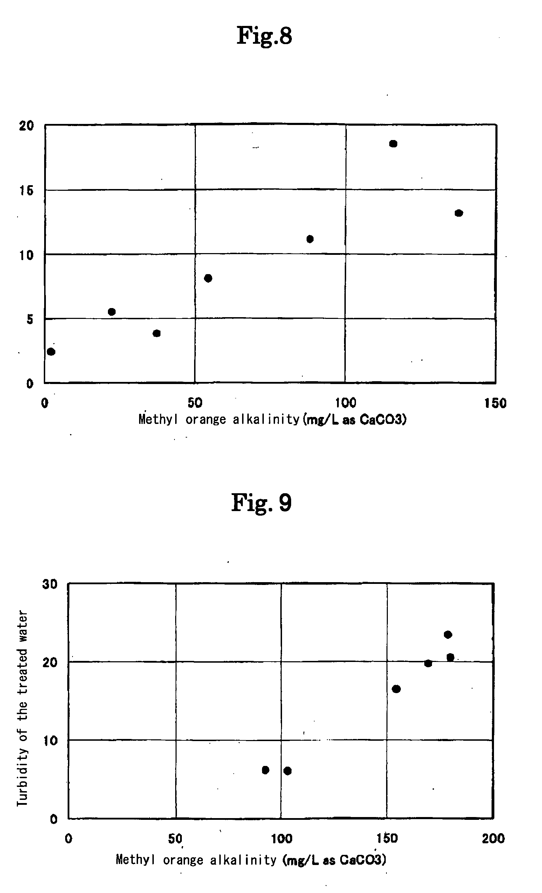

Fig. 8 shows the results of a jar test conducted on sewage collected during a non-rainfall event and adjusted for methyl orange alkalinity by adding sulfuric acid, as water to be treated. In the test, the same amount of chemical was added to each test water sample. It will be clear that the turbidity of the treated water decreases with reduction in the methyl orange alkalinity even if the suspended solid concentration in the raw water.

Fig. 9 shows the results of a jar test conducted on sewage flowing into a sewage disposal plant during a rainfall event as water to be treated. In the test, the same amount of chemical was added to each test water sample. The methyl orange alkalinity of the water to be treated decreases with increase in the amount of rain water mixed with the sewage, and the turbidity of the treated water decreases with reduction in the methyl orange alkalinity.

As shown in Figs. 8 and 9, if the coagulant dose is the same, the turbidity of the treated water decreases with reduction in the methyl orange alkalinity of the water to be treated. This means that to obtain the same turbidity of the treated water, the coagulant dose can be reduced according as the methyl orange alkalinity decreases.

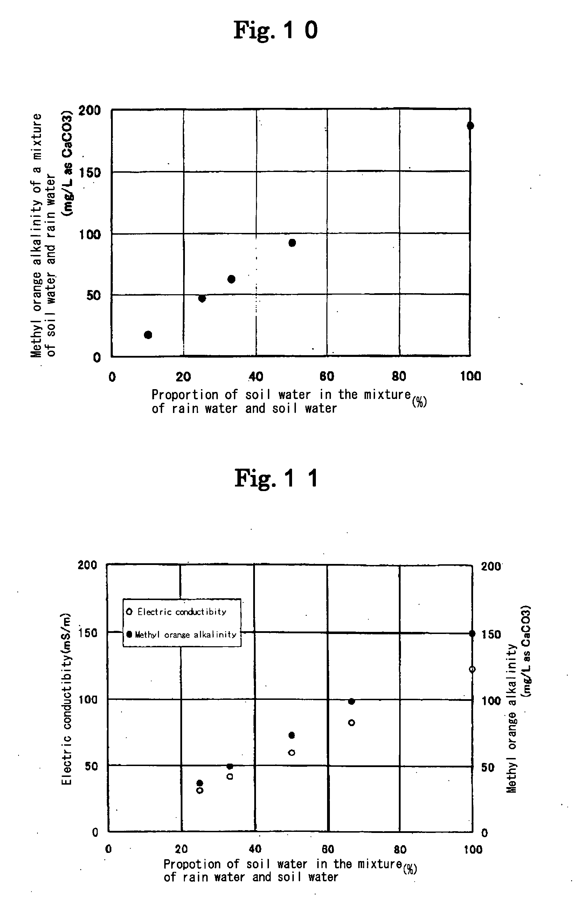

Fig. 10 shows the methyl orange alkalinity of a mixture of soil water collected during a non-rainfall event and diluted with rain water. The methyl orange alkalinity reduces according to the proportion of soil water in the mixture of rain water and soil water. Accordingly, the ratio of dilution with rain water can be calculated by previously checking the methyl orange alkalinity of sewage during non-rainfall events and measuring the methyl orange alkalinity of sewage during the rainfall event. During non-rainfall events, the methyl orange alkalinity of sewage is generally from 150 to 200 mg/Las CaCO₃ and differs according to hours of the day and days of the week. Therefore, it is desirable that methyl orange alkalinity values should be checked in advance for each hour of the day and each day of the week.

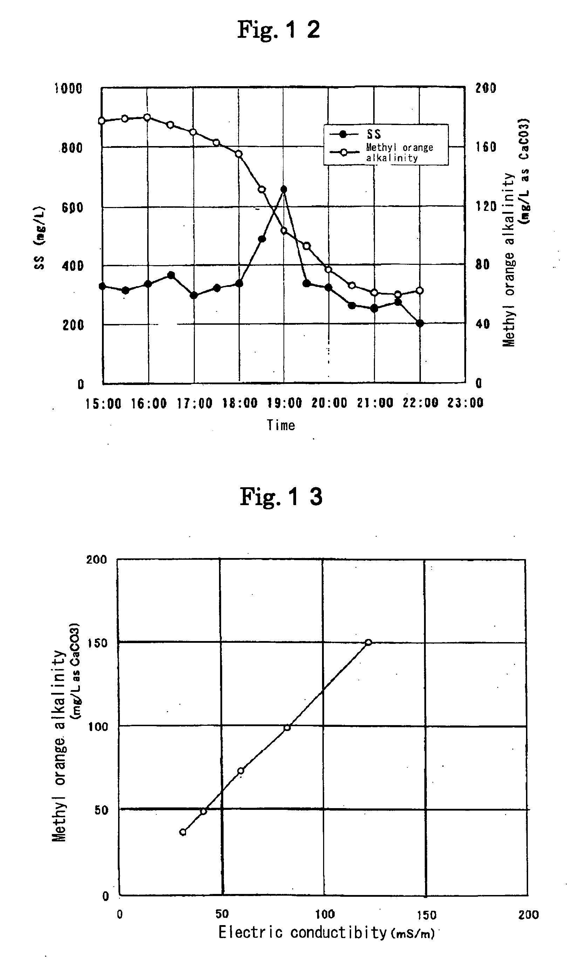

Fig. 11 shows the electric conductivity and methyl orange alkalinity of a mixture of soil water collected during a non-rainfall event and diluted with rain water. The electric conductivity decreases according to the proportion of soil water in the mixture of rain water and soil water. Fig. 13 shows the relationship between the electric conductivity and the methyl orange alkalinity shown in Fig. 11. There is an extremely good correlation between them. Accordingly, the ratio of dilution with rain water can be calculated by measuring the electric conductivity of sewage during the rainfall event in the same way as in the case of the methyl orange alkalinity. In addition, the methyl orange alkalinity can be estimated from the electric conductivity.

Fig. 12 illustrates a measured example showing changes with time of the suspended solid concentration (SS) and methyl orange alkalinity of sewage flowing into a sewage disposal plant during a rainfall event. The rainfall occurred from 15:00 to 19:00. Soil water was diluted with rain water flowing into the sewerage, and the methyl orange alkalinity reduced rapidly. The reason why the methyl orange alkalinity continued decreasing even after 19:00, at which the rainfall ended, is that there were a period of time required for the rain water to flow into the conduit and a time period required for the rain water having flowed in the conduit to flow as far as the disposal plant. The ratio of dilution with rain water can be obtained by dividing the methyl orange alkalinity during the non-rainfall event by the methyl orange alkalinity during the rainfall event. For example, at 20:00, the methyl orange alkalinity during the rainfall event is about 80 mg/Las CaCO₃, whereas the methyl orange alkalinity of the sewage during the non-rainfall event is about 180 mg/Las CaCO₃. Accordingly, it is found that the sewage during the non-rainfall event was diluted to about 2.3 times with the rain water.

Meanwhile, the SS in Fig. 12 also changes with time but assumes larger values than those obtained when the SS is diluted in the same ratio as the diluting ratio calculated from the methyl orange alkalinity. For example, at 20:00, if the SS is calculated based on the diluting ratio of 2.3 obtained from the methyl orange alkalinity, it should have reduced to about 87 mg/L because the SS of the sewage during the non-rainfall event is about 200 mg/L. The actual SS, however, is about 300 mg/L, which is about 210 mg/L larger than the value calculated from the ratio of dilution with the rain water. The suspended solids added by the rainfall may be pollutants that had accumulated on the road surface before the rainfall event and that flowed in together with the rain water and pollutants that had accumulated in the sewage conduit and that were washed away by the increase in water quantity due to the inflow of rain water. That is, suspended solids contained in water to be treated during a rainfall event are a mixture of suspended solids contained in the water during non-rainfall events and diluted with the rain water and additional suspended solids that join the above-described suspended solids during the rainfall event, and the concentration of each of the former and latter groups of suspended solids can be calculated based on the methyl orange alkalinity.

When coagulation treatment is carried out on sewage during a rainfall event as shown in Fig. 12, it has heretofore been common practice to calculate an optimum coagulant dose on the basis of the suspended solid concentration (SS1) in water to be treated.
That is, at 20:00 in Fig. 12, for example, an optimum coagulant dose is calculated on the basis of SS1=about 300 mg/L. In contrast, the present invention calculates an optimum coagulant dose (M1) by making a correction based on the methyl orange alkalinity (A1) to the coagulant dose (M4) calculated from the suspended solid concentration (SS1) in water to be treated on the basis of the fact that the turbidity of the treated water decreases with reduction in the methyl orange alkalinity of the water to be treated, as shown in Figs 8 and 9. Further, in the present invention, the coagulant dose (M4) may be calculated as follows. The suspended solid concentration SS1 is divided into the suspended solid concentration (SS2) of components consisting of diluted suspended solids in the sewage during the non-rainfall event and the suspended solid concentration (SS3) of components added to the sewage during the rainfall event and, coagulant doses (M2 and M3) for the respective groups of components are then calculated on the basis of the methyl orange alkalinity (A1)d, a total of the calculated doses, i.e. M2+M3, being used as a coagulant dose (M1) corresponding to the suspended solid concentration SS1.

The coagulation-sedimentation apparatus according to the present invention shown in Fig. 2 performs flow rate measurement with the flowmeter 30, methyl orange alkalinity measurement with the methyl orange alkalinity meter 32, and SS measurement with the SS meter 34, as has been stated above.
Based on the measured methyl orange alkalinity (A1) and SS (SS1), an optimum inorganic coagulant dose (N1) and an optimum organic polymeric coagulant dose (P1) per unit quantity of water to be treated are calculated according to the following steps (1) to (7). Then, flow rates of coagulants to be added for the total amount of water to be treated are calculated on the basis of the calculated coagulant doses and the flow rate Q1 to control the inorganic coagulant feeding pump 42 and the organic polymeric coagulant feeding pump 44.
(1) The methyl orange alkalinity (A1) is compared to the values of the methyl orange alkalinity measured in advance during non-rainfall events to obtain a ratio of dilution with rain water (D-fold dilution). At this time, in a case where the methyl orange alkalinity value during non-rainfall events differs according to hours of the day and days of the week, methyl orange alkalinity values are checked in advance for each hour of the day and each day of the week, and comparison is made with these methyl orange alkalinity values.
(2) Based on the diluting ratio D, SS1 (suspended solid concentration during the rainfall event) is divided into the suspended solid concentration SS2 of components of the sewage during the non-rainfall event which has been diluted with the rain water and the suspended solid concentration SS3 of components added to the sewage by the rainfall.
(3) An inorganic coagulant dose N2 and an organic polymeric coagulant dose P2 corresponding to the suspended solid concentration SS2 are calculated.
(4) An inorganic coagulant dose N3 and an organic polymeric coagulant dose P3 corresponding to the suspended solid concentration SS3 are calculated.
(5) N4=N2+N3 and P4=P2+P3 are calculated as coagulant doses corresponding to the suspended solid concentration SS1.
(6) An optimum inorganic coagulant dose N1 per unit quantity of the water to be treated is calculated by correcting the coagulant dose N4 for the methyl orange alkalinity reduction effect.
(7) An optimum organic polymeric coagulant dose P1 per unit quantity of the water to be treated is calculated by correcting the coagulant dose P4 for the methyl orange alkalinity reduction effect.
The optimum coagulant doses may be determined by measuring the electric conductivity instead of the methyl orange alkalinity and performing the calculation on the basis of the measured electric conductivity. The arrangement may also be such that the turbidity is measured instead of the suspended solid concentration SS, and the measured turbidity is converted to the corresponding suspended solid concentration SS.
The following is an explanation of a specific test performed with the coagulation-sedimentation apparatus shown in Fig. 2.
Coagulation-sedimentation treatment was carried out for 7 hours by using sewage in a combined sewerage system during a rainfall event as water to be treated and using ferric chloride as an inorganic coagulant and an anionic polymeric coagulant as an organic polymeric coagulant under the conditions that the quantity of treated water was 180 m³/hour and the surface loading was 50 m³/(m²·hour). The properties of the water to be treated were as shown in Fig. 12: the methyl orange alkalinity and the SS before the rainfall event were 178 mg/Las CaCO₃ and 328 mg/L, respectively; and the methyl orange alkalinity and the SS at the termination of the test were 63 mg/Las CaCO₃ and 200 mg/L, respectively.

Table 2 below shows the results of the control based on the present invention and those of the control based on the conventional method.

**[Table 2]**

| Coagulants | Integrated value of dose (kg) | | Reduction rate (%) |
|---|---|---|---|
| | Control based on present invention | Proportional control based on SS in water to be treated | |
| Inorganic coagulant | 49 | 64 | 24 |
| Organic polymeric coagulant | 3.2 | 4.8 | 33 |

When the dose control was effected on the basis of the present invention, the average removal rate of suspended solids was 90%, which was comparable to the average removal rate of the SS expected when performing proportional control based on the SS in the water to be treated, which is the conventional control method. Regarding the coagulant doses, it was possible according to the present invention to reduce the inorganic coagulant dose by 24% and the organic polymeric coagulant dose by 33%, as shown in Table 2.

According to the control method of the present invention, when the methyl orange alkalinity of water to be treated changes owing to the inflow of rain water during a rainfall event, the suspended solid concentration and methyl orange alkalinity or electric conductivity of the water to be treated are measured, and an optimum amount of coagulant to be added is calculated on the basis of the measured values, thereby making it possible to prevent excess addition of coagulants, achieve a low-cost operation, and stably provide treated water of good quality.

## Claims

1. A coagulation-sedimentation apparatus comprising:
a separation tank body;
a partition member installed in said separation tank body to divide an interior of said separation tank body into an upper chamber and a lower chamber;
a raw water inlet pipe that introduces water to be treated into said upper chamber; and
a water distributing passage having an upper opening opening into said upper chamber and a lower opening opening into said lower chamber to guide a part of said water from said upper chamber to said lower chamber;
said upper chamber having in an upper part thereof a first treated water outlet for discharging treated water to an outside;
said lower chamber having a second treated water outlet above said lower opening of said water distributing passage to discharge the treated water to the outside, said lower chamber further having a floc outlet below said lower opening of said water distributing passage to discharge flocs separated from the water;
wherein a flow velocity of upward flow of the water toward said first treated water outlet in said upper chamber and a flow velocity of upward flow of the water toward said second treated water outlet in said lower chamber can be controlled to velocities at which flocs in the upward flows can settle.

2. A coagulation-sedimentation apparatus according to claim 1, wherein the flow velocity of upward flow of the water toward said first treated water outlet in said upper chamber and the flow velocity of upward flow of the water toward said second treated water outlet in said lower chamber can be controlled to velocities at which flocs in said upward flows can settle by adjusting an amount of treated water discharged from said second treated water outlet.

3. A coagulation-sedimentation apparatus according to claim 2, wherein said separation tank body has a bottom wall portion and a peripheral wall portion extending upward from said bottom wall portion;
said partition member being installed with a gap between itself and an inner surface of said peripheral wall portion of said separation tank body;
said water distributing passage being formed between said partition member and a funnel-shaped member installed below said partition member to slant downward from said inner surface of said peripheral wall portion of said separation tank body toward a center of said separation tank body.

4. A coagulation-sedimentation apparatus according to claim 3, wherein said partition member is formed in a bowl-like shape recessed convergently downward toward a central portion thereof;
said raw water inlet pipe being adapted to discharge the water to be treated downwardly toward said central portion of said partition member.

5. A coagulation-sedimentation apparatus according to claim 4, wherein said upper part of said first chamber is provided with a floating filtering medium, a filtering medium outflow preventing screen above said floating filtering medium, and a filtering medium retaining screen below said floating filtering medium;
said first treated water outlet being provided above said filtering medium outflow preventing screen.

6. A coagulation-sedimentation apparatus according to claim 1, further having a coagulant adding device that adds a coagulant to the water to be treated introduced into said separation tank body by the raw water inlet pipe, said coagulant adding device having a vertical sinuous flow path structure consisting essentially of a series of at least one downward flow path and at least one upward flow path for passing the water to be treated, wherein the coagulant is added to the water to be treated at an upstream side of said vertical sinuous flow path structure, and the water is supplied to said raw water inlet pipe through said upward flow path and said downward flow path.

7. A coagulation-sedimentation apparatus according to claim 6, wherein said coagulant adding device has two said coagulant adding tanks disposed successively along a flow path of the water to be treated, wherein one of said two coagulant adding tanks that is provided at an upstream side adds an inorganic coagulant, and the other coagulant adding tank provided at a downstream side adds an organic coagulant, so that the water to which the inorganic coagulant and the organic coagulant have been added is supplied to said raw water inlet pipe.

8. A coagulation-sedimentation apparatus according to claim 6 or 7, further having:
a flowmeter that measures a quantity of water to be treated which is introduced into said separation tank body through said raw water inlet pipe;
a methyl orange alkalinity meter that measures a methyl orange alkalinity of the water to be treated; and
an SS meter or a turbidimeter that measures a suspended solid concentration in the water to be treated.

9. A coagulation-sedimentation apparatus according to claim 8, further having a controller for calculating an appropriate amount of coagulant to be added to the water to be treated on a basis of data measured with said flowmeter, methyl orange alkalinity meter, and SS meter or turbidimeter.

10. A coagulation-sedimentation apparatus according to claim 8, further having a controller for calculating during a rainfall event an appropriate amount of coagulant to be added for suspended solids in the water that is expected in the absence of the rainfall and also calculating an appropriate amount of coagulant to be added for suspended solids added to the water by the rainfall on a basis of data measured with said flowmeter, methyl orange alkalinity meter, and SS meter or turbidimeter.

11. A coagulation-sedimentation apparatus according to claim 6 or 7, further having:
a flowmeter that measures a quantity of water to be treated that is introduced into said separation tank through said raw water inlet pipe;
an electric conductivity meter that measures an electric conductivity of the water to be treated; and
an SS meter or a turbidimeter that measures a suspended solid concentration in the water to be treated.

12. A coagulation-sedimentation apparatus according to claim 11, further having a controller for calculating an appropriate amount of coagulant to be added to the water to be treated on the basis of data measured with said flowmeter, electric conductivity meter, and SS meter or turbidimeter.

13. A coagulation-sedimentation apparatus according to claim 11, further having a controller for calculating during a rainfall event an appropriate amount of coagulant to be added for suspended solids in the water that is expected in the absence of the rainfall and also during a non-rainfall event and also calculating an appropriate amount of coagulant to be added for suspended solids added to the water by the rainfall on the basis of data measured with said flowmeter, electric conductivity meter, and SS meter or turbidimeter.
